# Europäisches Patentamt

(19) **European Patent Office**

**Office européen des brevets**

(11) Veröffentlichungsnummer: **0 015 531**
**B1**

(12) ## EUROPÄISCHE PATENTSCHRIFT

(45) Veröffentlichungstag der Patentschrift:
**19.10.83**

(51) Int. Cl.³: **G 06 K 17/00,** G 06 K 19/00,
G 01 N 1/10 // G01F15/075

(21) Anmeldenummer: **80101063.8**

(22) Anmeldetag: **03.03.80**

(54) **Einrichtung zur Registrierung der Daten bestimmter Gutmengen, insbesondere von Milchlieferungen.**

(30) Priorität: **06.03.79 CH 2150/79**

(43) Veröffentlichungstag der Anmeldung:
**17.09.80 Patentblatt 80/19**

(45) Bekanntmachung des Hinweises auf die Patenterteilung:
**19.10.83 Patentblatt 83/42**

(84) Benannte Vertragsstaaten:
**AT FR GB IT**

(56) Entgegenhaltungen:
**DE-A-1 607 021**
**DE-A-2 347 477**
**DE-B-2 213 968**
**FR-A-1 458 196**
**GB-A-1 039 920**
**US-A-3 589 867**
**US-A-3 961 527**

(73) Patentinhaber: **Schönhuber, Max Josef, Dr.-Ing.,
Seefeldquai 1, CH-8008 Zürich (CH)**

(72) Erfinder: **Schönhuber, Max Josef, Dr.-Ing.,
Seefeldquai 1, CH-8008 Zürich (CH)**

(74) Vertreter: **Dorner, Jörg, Dr.-Ing. et al,
Landwehrstrasse 37, D-8000 München 2 (DE)**

BUNDESDRUCKEREI BERLIN

## Einrichtung zur Registrierung der Daten bestimmter Gutmengen, insbesondere von Milchlieferungen

Die Erfindung bezieht sich auf eine Einrichtung zur Registrierung der Daten bestimmter Gutmengen, insbesondere von Milchlieferungen, welche an Lieferstellen mittels eines Sammeltransportfahrzeuges eingesammelt und zu einer Sammelstelle gebracht werden, mit einem im Sammeltransportfahrzeug befindlichen Registriergerät, welches Dateneingabevorrichtungen, eine damit verbundene Steuereinheit und einen daran angeschlossenen, einen aus dem Gerät entnehmbaren Datenträger aufweisenden Speicher enthält, sowie mit einem Datenauswertgerät am Ort der Sammelstelle oder am Ort eines mehreren Sammelstellen übergeordneten Auswerte- bzw. EDV-Zentrums, in welches der Datenträger des Speichers des Registriergerätes einsetzbar bzw. einlesbar ist und in welchen im Speicher eingeschriebene Daten direkt oder indirekt nach einer Konvertierung auf einen gerätekompatiblen Datenträger über eine Konvertierstation ablesbar, verarbeitbar und auswertbar sind.

Als Anwendungsgebiete derartiger Registrierungseinrichtungen kommen beispielsweise das Einsammeln von Heimarbeit, das Einsammeln von landwirtschaftlichen Erzeugnissen wie Getreide, Obstsäften, Sirup und dergleichen, das Einsammeln von forstwirtschaftlichen Erzeugnissen und ähnliches in Frage. Bevorzugtes Anwendungsgebiet ist jedoch, wie oben bereits angedeutet, das Einsammeln der in einer Reihe verstreuter landwirtschaftlicher Betriebe erzeugten Milch durch einen Milchsammelwagen, welcher die Milchlieferungen gesammelt zu einer Sammelstelle bzw. in die Molkerei transportiert. Es sei bereits jetzt bemerkt, daß im besonderen Anwendungsfall des Einsammelns von Milchlieferungen die Vorteile der vorliegenden Erfindung besonders deutlich zutage treten.

In Verbindung mit der Einsammlung von Milchlieferungen bereits in Gebrauch befindlicher Registriersysteme (siehe beispielsweise US-PS 3 961 527 sowie DE-OS 2 347 477) enthalten in den Milchsammelwagen installierte Registriergeräte, in welchen ein Datenträger, etwa eine Magnetbandkassette oder Metallbandkassette, mit den während des Einsammelvorganges anfallenden Daten beschrieben wird. Die Daten werden von Eingabevorrichtungen bezogen, welche zum einen, etwa über eine Tastatur oder Codierschalter, die Eingabe bestimmter gleichbleibender Daten, wie Fahrzeug- oder Fahrernummer, Zentralsammelstellennummer, Datum, Fahrtbeginn usw. gestatten und zum anderen eine Reihe von Signalgebern und Meßwertgebern aufweisen, von denen für die einzelnen Lieferantenstellen charakteristische Daten bezogen werden, etwa eine Flüssigkeitsmenge, Meßwerte über bestimmte Flüssigkeitseigenschaften, welche nicht in einem Analyselabor, sondern bereits während des Einsammelns gemessen werden, wie Temperatur, pH-Wert usw. Eine Lieferstellennummer kann über die Tastatur oder über manuell oder automatisch betätigte Codierschalter zur Registrierung gelangen. Es kann auch ein Ausweisleser oder eine induktiv arbeitende Behältermarkierung vorgesehen sein. Die Steuereinheit, welche die Dateneingabevorrichtungen mit dem Speicher verbindet, sorgt für die Speicherung in der gewünschten Reihenfolge und kann Hilfsspeicher enthalten, um die von den Dateneingabevorrichtungen eintreffenden Daten bis zur Weitergabe an den Speicher mit dem entnehmbaren Datenträger festhalten zu können.

Beim Einsammeln von Gutmengen mittels eines Sammeltransportfahrzeugs, in welchem die Gutmengen miteinander vermengt oder vermischt werden, ist es für eine gerechte Beurteilung der einzelnen Lieferantenstellen bezüglich der gelieferten Gutmengen notwendig, mindestens von Zeit zu Zeit eine Analyse des jeweils gelieferten Gutes über diejenigen Messungen hinaus vorzunehmen, welche bereits während jeder Einsammlung regelmäßig, beispielsweise täglich gemacht werden. Dies geschieht beim Einsammeln von Milchlieferungen mittels Milchsammelwagen in der Weise, daß in bestimmten zeitlichen Abständen, beispielsweise wöchentlich einmal, während einer Sammeltour eine der Anzahl von Milchlieferanten entsprechende Zahl von Probenbehälter mit Proben der einzelnen Milchlieferungen gefüllt werden und die Proben dann in einem Analyselabor untersucht werden. Die Zuordnung der Probenbehälter zu den einzelnen Lieferanten wird durch eine feste Halterung der Probenbehälter in Rahmen oder Stativen gewährleistet, so daß die Reihenfolge des Einsammelns bei entsprechender Steuerung der Einfüllung der Proben in die Probenbehälter mit der Reihenfolge der Probenbehälter in ihrer Halterung übereinstimmt. Weitere, für das Analyselabor wichtige Daten wurden bekanntermaßen von Hand durch eine Bedienungsperson bzw. dem Fahrer des Milchsammelwagens schriftlich festgehalten und am Ort des Analyselabors mit den abgefüllten Probenbehältern abgeliefert. Die Handaufzeichnung erwies sich als nachteilig, da sie zeitraubend und mitunter fehlerbehaftet war.

Man hat auch schon versucht, die von dem Analyselabor benötigten Datenaufzeichnungen dadurch von der ursprünglichen Datenaufzeichnung für die zentrale Sammelstelle unabhängig zu machen, daß man die in besonderen, beispielsweise trommelartigen Magazinen untergebrachten Probenflaschen mit einer Magnetbandspur beschriftbar machte und mit einer besonderen Schreibvorrichtung mit den das Analyselabor interessierenden Daten beschriftete.

Ein derartiges System hat zwar den Vorteil, daß hinsichtlich der Zuordnung der Probenflaschen zu den einzelnen Lieferstellen nicht mehr auf eine feste Reihenfolge der Probenflaschen innerhalb einer Halterung geachtet werden muß. Es kann aber als Nachteil eines solchen Systems empfunden werden, daß die eigens zu diesem Zwecke konzipierten Schreibvorrichtungen für die automatische Beschriftung der einzelnen Probenflaschen vergleichsweise kompliziert und den Umgebungsbedingungen entsprechend störungsanfällig sind, so daß die gesamte Anordnung an und für sich im Führerhaus des Sammeltransportfahrzeugs untergebracht werden müßte, was jedoch praktisch nicht möglich ist. Auch am Orte des Analysenlabors ist eine zusätzliche, eigens dafür konzipierte Vorrichtung zum automatischen Ablesen der einzelnen Daten der Beschriftung der Probenflaschen notwendig. Darüber hinaus ist das Speichervermögen einer Beschriftungsspur eines Probenbehälters bei dem bekannten System notwendigerweise beschränkt und die Beschriftungsgeschwindigkeit relativ langsam. Schließlich sind die mechanischen Einrichtungen für den Antrieb und die Bewegung der Probenbehälter, beispielsweise in scheibenartigen oder trommelartigen Magazinen, vergleichsweise kompliziert. Außerdem sind zusätzlich Drehbewegungen der Probenflaschen um die eigene Achse zum Beschriften bzw. Ablesen der Daten notwendig. Darüber hinaus kann jedesmal dann die Datenübertragung beim Beschriften bzw. Ablesen des Datenbandes an der Probenflasche störanfällig werden, wenn Abweichungen von der Probenflaschenrundung auftreten, wie das bei Kunststoffbehältern der Fall sein kann.

Durch die Erfindung soll die Aufgabe gelöst werden, eine Einrichtung der eingangs beschriebenen Art so auszugestalten, daß der apparative Aufwand zur Datenerfassung für eine nach dem Einsammeln der Gutmengen vorzunehmende Analyse von Proben der Gutmengen sowohl am Sammeltransportfahrzeug als auch am Ort des Analyselabors vergleichsweise gering und die Einrichtungen auf dem Sammeltransportfahrzeug besonders betriebssicher sind.

Diese Aufgabe wird erfindungsgemäß dadurch gelöst, daß das Registriergerät des Sammeltransportfahrzeugs einen weiteren Speicher mit aus dem Gerät entnehmbarem weiterem Datenträger enthält, wobei dieser weitere Speicher ebenfalls an die Steuereinheit angeschlossen ist, daß die Steuereinheit eine automatisch arbeitende Auswählvorrichtung enthält, mittels welcher die über die Dateneingabevorrichtungen eintreffenden Daten den beiden Speichern wahlweise zuleitbar sind und daß die insbesondere in Digitalsignale umgeformten Signale der Dateneingabevorrichtungen Signalanteile aufweisen, welche diese Dateneingabevorrichtungen kennzeichnen und welche das Auswahlkriterium für die Auswählvorrichtung bilden.

Es ist zwar bereits bekannt (GB-PS 1 039 920, insbesondere Fig. 4), abzuspeichernden Informationen als Signalanteil eine Zieladresse für die Abspeicherung an bestimmten Speicherplätzen in einem einheitlichen Speicher mitzugeben und diesen Speicher wahlweise je nach Bedarf mit Aufzeichnungseinrichtungen zu verbinden. Die den Speicherplatz in dem einheitlichen Hauptspeicher bestimmenden Signalanteile bilden jedoch nicht Auswahlkriterium für die Übertragung bestimmter Informationen an bestimmte der nachgeschalteten Aufzeichnungsgeräte.

Demgegenüber erfolgt bei der hier angegebenen Einrichtung eine selbsttätige Auswahl einiger das Analyselabor interessierender Daten, je nach dem ihre Herkunft kennzeichnenden Signalanteil, zur Einspeicherung in dem weiteren Speicher, der gleichsam ein Analysebuch für das Analyselabor darstellt, ohne durch die Vielzahl der insgesamt im ersten Speicher eingespeicherten Daten belastet zu sein.

Mindestens einige der Daten können also bei der hier angegebenen Einrichtung von der Auswählvorrichtung entweder dem erstgenannten Speicher oder dem zweitgenannten Speicher zugeführt werden. Die Anordnung kann auch so getroffen sein, daß mindestens einige der Daten von der Auswählvorrichtung entweder dem erstgenannten bzw. zweitgenannten Speicher allein oder beiden Speichern zugeführt werden.

Die automatisch arbeitende Auswählvorrichtung kann abhängig von einem bestimmten Zustand auf dem Sammeltransportfahrzeug ein- und ausschaltbar sein. Beispielsweise kann die Auswählvorrichtung in Tätigkeit treten, wenn ein mit einer Probennahmevorrichtung zusammenwirkendes Magazin mit Probegefäßen in eine Halterung eingesetzt ist.

Die von den Dateneingabevorrichtungen zur Verfügung gestellten Signale sind vorzugsweise in digitale Form übergeführt oder aus Kostengründen teilweise als einfache Ja/Nein-Signale im Hinblick auf eine Einhaltung bzw. Nichteinhaltung eines vorgeschriebenen Grenzwertes, z. B. bei Temperatur oder pH-Wert, angeboten und enthalten ihre Herkunft kennzeichnende Signalanteile, auf welche die Auswählvorrichtung anspricht, derart, daß ein erstes Signal die Einspeicherung der betreffenden Daten nur in dem erstgenannten Speicher, ein zweites Signal die Einspeicherung der zugeführten Daten nur in den zweitgenannten Speicher und ein drittes Signal die Einspeicherung der zugehörigen Daten in beide Speicher bewirkt.

Man erkennt, daß die hier vorgeschlagene Einrichtung durch eine keineswegs aufwendige Erweiterung der Registriergeräte der Sammeltransportfahrzeuge eine Aufzeichnung der das Analyselabor interessierenden Daten in geschützter Umgebung im Fahrerhaus ermöglicht, wobei für diese Aufzeichnung physikalisch gleichwirkende und sogar identisch ausgebildete Speicher verwendet werden können, wie sie auch schon zur ursprünglichen Aufzeichnung der Daten für die zentrale Sammelstelle verwendet werden. Am Orte des Analyselabors können zur Ergänzung der Daten von den Datenträgern um die Analysenergebnisdaten Aufzeichnungsmittel verwendet werden, welche mit denjenigen übereinstimmen, die im Registriergerät des Sammelwagens verwendet werden. Es kann damit ein und derselbe Datenträger einmal im zweiten Speicher des Registriergerätes im Milchsammelwagen beispielsweise mit den Lieferantennummern und zum anderen im Analysengerät des Analysenlabors mit den dazugehörigen Analysenergebnissen beschriftet werden. Es ist also nur dieser so vorbeschriftete Datenträger, ebenso wie bisher die Handaufzeichnungen, mit den gefüllten Probenbehältern zum Analysenlabor mitzuliefern und dort in den gleichgewählten Datenschreiber einzusetzen. Es werden also nicht nur die technischen Komponenten und Einrichtungen vereinfacht und die Zuverlässigkeit erhöht, sondern es wird auch der wirtschaftliche Aufwand verringert. Reservehaltung und Reparatur werden vereinfacht.

Eine zusätzliche Kontrolle bezüglich der Zuordnung zwischen Lieferstelle und Probenbehälter kann durch eine robust arbeitende störungsunempfindliche Markierungsvorrichtung erreicht werden, welche in die Kunststoffprobenbehälter oder in den Behälterverschluß Markierungen zur Kennzeichnung einer bestimmten Reihenfolge der Probennahme einbringt. Diesen Marken können bestimmte, auf dem Datenträger des zweiten Speichers gespeicherte Datensignale zugeordnet sein, welche die Reihenfolge der Probennahme kennzeichnen. Werden die vergleichsweise groben Marken der Probenbehälter darüber hinaus zur Steuerung des Schreibegerätes am Orte des Analyselabors verwendet, so kann die Analysenreihe unabhängig von einer festzuhaltenden Reihenfolge der Probenbehälter in einer Halterung durchgeführt werden, ohne daß eine Beschränkung der zu den einzelnen Proben zu berücksichtigenden Daten in Kauf genommen werden müßte.

Nachfolgend wird ein Ausführungsbeispiel unter Bezugnahme auf die Zeichnung erläutert. Es stellt dar

Fig. 1 eine schematische Ansicht eines Milchsammelwagens bei der Aufnahme einer Milchlieferung und

Fig. 2 ein Blockschaltbild des Registriergerätes des Milchsammelwagens nach Fig. 1.

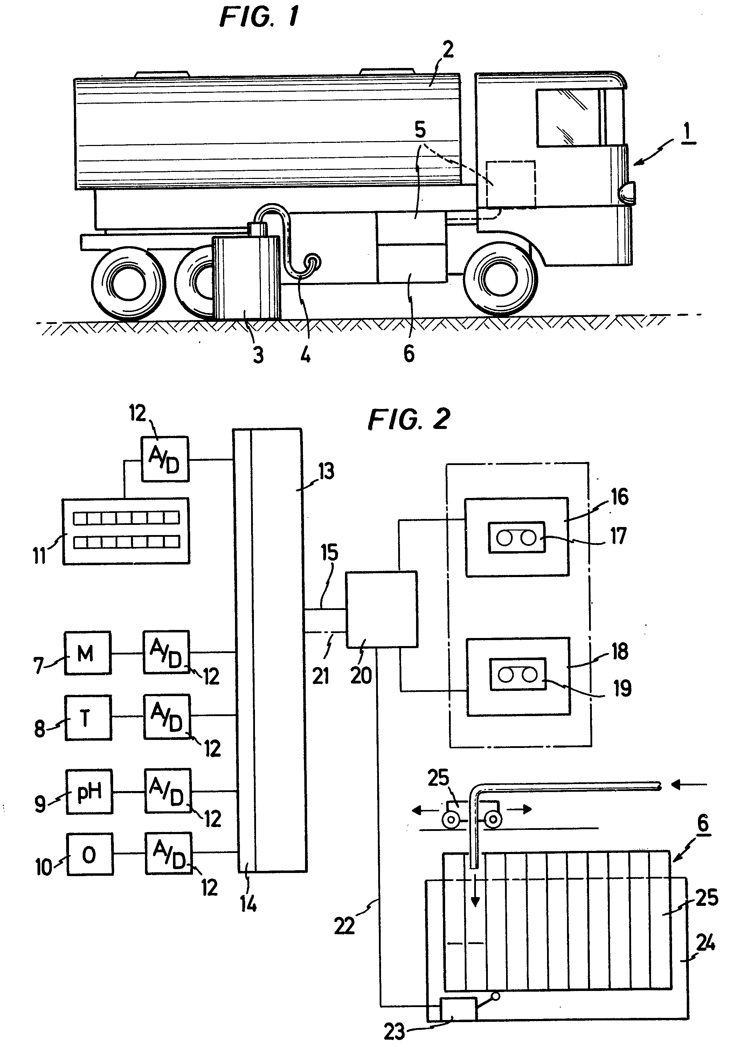

In Fig. 1 ist ein Milchsammelwagen mit 1 bezeichnet. Der Tank 2 des Milchsammelwagens nimmt Milchlieferungen aus den in den einzelnen landwirtschaftlichen Betrieben aufgestellten und gefüllten Milchbehältern 3 auf, welche über eine in Fig. 1 nur schematisch angedeutete Leitung 4 sowie Pumpeinrichtungen des Sammelwagens 1 mit diesem verbindbar sind. Das zur Registrierung der Daten der einzelnen Milchlieferungen dienende Registriergerät des Milchsammelwagens ist symbolisch bei 5 angedeutet und befindet sich zum einen wesentlichsten Teil, abgesehen von Zubehörkomponenten, im Fahrerhaus des Sammelwagens, d. h. in einer annehmbaren Umweltatmosphäre. Außerdem ist an dem Sammelwagen noch eine Probennahmevorrichtung 6 angeordnet. Es sei darauf hingewiesen, daß die Lage der hier interessierenden Einrichtungsteile, soweit bisher beschrieben, an dem Sammelwagen 1 nur rein schematisch angegeben ist und vollständig anders gewählt werden kann.

Das Registriergerät 5 enthält als periphere Ergänzung bzw. als Zubehör eine Anzahl von Meßwertaufnehmern und Meßwertgebern, beispielsweise die Meßwertaufnehmer und Meßwertgeber 7 bis 10 zur Erzeugung von Signalen entsprechend der gelieferten Menge M, der Temperatur T, des pH-Wertes und irgend eines weiteren physikalischen Wertes, vorwiegend außerhalb des Fahrerhauses. Außer den von den Meßwertaufnehmern und Meßwertgebern 7 bis 10 gebildeten Eingabevorrichtungen ist eine Eingabevorrichtung oder Codiervorrichtung 11 vorgesehen, welche Datensignale entsprechend einer über eine Tastatur eingegebenen Fahrzeugnummer, einer Fahrerkennummer, eines Datums und einer Zentralsammelstellennummer bereitstellt. Selbsttätig oder unter manueller Steuerung oder auch unter Steuerung durch Kennmarken an dem Milchbehälter 3 vermag die Eingabevorrichtung 11 auch Datensignale entsprechend einer Lieferantennummer und gegebenenfalls weitere, den Lieferanten charakterisierende Datensignale abzugeben.

Die Ausgangssignale der Eingabevorrichtungen 7 bis 10 bzw. 11 werden durch Analog-/Digitalwandler 12 in Digitalsignale umgeformt oder von Anfang an bereits als Digitalsignale zur Verfügung gestellt, oder gar aus Kostengründen als einfache Ja/Nein-Signale im Hinblick auf eine Einhaltung bzw. Nichteinhaltung eines vorgeschriebenen Grenzwertes z. B. bei Temperatur oder pH-Wert angeboten und gelangen dann zu einer Steuereinheit 13, welche zur Zwischenspeicherung der Datensignale der Eingabevorrichtungen eine Registergruppe 14 enthält. Die Steuerschaltung der Steuereinheit 13 wählt die Register der Registergruppe 14 in vorbestimmter Reihenfolge an, um die Registerinhalte der Reihe nach über eine Ausgangsleitung 15 einem ersten Speicher 16 des Registriergerätes des Milchsammelwagens zuzuführen. Der Speicher 16 enthält einen in der Zeichnung nicht gezeigten Schreibkopf und einen Datenträger 17 in Gestalt einer Magnetbandkassette oder Metallbandkassette.

Die Steuereinheit 13 und der Speicher 16 sind in demjenigen Teil des Registriergerätes des Milchsammelwagens gelegen, der sich im Fahrerhaus befindet.

In unmittelbarer Nachbarschaft des Speichers 16 und bei der Ausführungsform nach Fig. 2 in demselben Gehäuse mit diesem Speicher ist ein weiterer Speicher 18 angeordnet, der bei dem hier beschriebenen Ausführungsbeispiel genauso ausgebildet ist wie der Speicher 16. Beiden Speichern ist gemeinsam, daß sie einen leicht aus dem Gerät entnehmbaren Datenträger besitzen, welcher nach der Aufzeichnung in einem vom Registriergerät entfernten Lesegerät auswertbar ist. Der Datenträger des Speichers 18 ist in Fig. 2 mit 19 bezeichnet. Es sei an dieser Stelle bemerkt, daß als weiterer Speicher im Sinne der vorliegenden Überlegungen auch eine Anordnung zu verstehen ist, welche einen von dem Datenträger 17 getrennten, unabhängig entnehmbaren Datenträger umfaßt, welcher von einer auch für den Datenträger 17 verwendeten Aufzeichnungsvorrichtung beschrieben werden kann, welche wahlweise mit dem einen oder dem anderen Datenträger in Zusammenwirkung gebracht wird.

Die Speicher 16 und 18 sind mit der Ausgangsleitung 15 der Steuereinheit 13 über eine Auswählvorrichtung 20 gekoppelt, welche entscheidet, ob ein auf der Leitung 15 auftretendes Datensignal in den Speicher 16 oder in den Speicher 18 oder in beide Speicher eingespeichert wird. Zu diesem Zweck können die Eingabevorrichtungen mit den gegebenenfalls zugehörigen Analog-/Digitalwandlern so ausgebildet sein, daß sie zusätzlich zu dem eigentlichen Dateninhalt in den Ausgangssignalen eine Adresse bilden, auf welche die Auswählvorrichtung 20 anspricht, so daß bereits durch die Form des die jeweilige Eingabevorrichtung verlassenden Signals entschieden wird, in welchen der Speicher 16 und/oder 18 die Einspeicherung erfolgt. Eine andere Möglichkeit der Steuerung der Auswählvorrichtung 20 besteht darin, die Umschaltung von dem Speicher 16 auf den Speicher 18 und umgekehrt abhängig von der vorgegebenen Reihenfolge der Anwahl der Dateneingabevorrichtungen vorzunehmen, derart, daß die Auswählvorrichtung 20 auf die Nummer der Reihenfolge des angewählten Datensignals anspricht.

Die Auswählvorrichtung 20 kann über eine Steuerleitung 22 ein- und ausgeschaltet werden, über die ein Schaltsignal zugeführt wird, das von einem Zustandsfühler 23 der Probennahmevorrichtung 6 erzeugt wird. In eine Halterung 24 der Probennahmevorrichtung 6 ist ein Magazin eingesetzt, welches Probenbehälter 25 in festliegender Reihenfolge enthält. Die Probenbehälter werden mittels einer schematisch in Fig. 2 bei 25 angegebenen Probenabfülleinrichtung, etwa einer Probennadel bzw. Injektionsnadel gefüllt, wobei die Probenabfüllvorrichtung oder die Stative mit den Probenbehältern entsprechend den Haltepunkten des Milchsammelwagens an den Lieferstellen schrittweise vorrückt, so daß eine eindeutige Zuordnung zwischen den einzelnen Probenbehältern und den Lieferanten gegeben ist.

Sind sämtliche Lieferanten besucht und sämtliche Milchlieferungen eingesammelt, so wird die Sammellieferung aus dem Tank 2 in der zentralen Sammelstelle oder der Molkerei abgegeben und der Datenträger 17 des Speichers 16 gelangt mit für die Abrechnung und Buchführung erforderlichen Unterlagen in eine elektronische Datenverarbeitungseinrichtung mit einem geeigneten Lesegerät, während das die Probenbehälter umfassende Magazin 25 der Probennahmevorrichtung 6 zusammen mit dem Datenträger 19 des Speichers 18 zu einem Analyselabor gebracht wird, in welchem durch Analyse des Inhalts der einzelnen Probenbehälter für die jeweiligen Milchlieferungen diejenigen Daten ermittelt werden, die nicht durch Messungen bereits bei der Einsammlung der Lieferung gewonnen werden konnten. Die Analysenergebnisse werden auf dem Datenträger 19 zusätzlich zu den gespeicherten Daten insbesondere der Lieferantennummer aufgeschrieben, wobei ein mit demjenigen des Registriergerätes übereinstimmendes Aufzeichnungsmittel zum Einsatz kommen kann, um dann ebenfalls zu der zentralen Sammel- bzw. Auswertestelle weitergereicht oder auf dem Wege einer Datenfernübertragung oder einer Datenfernverarbeitung bzw. tele processing weiterverarbeitet zu werden.

Anstelle der in Fig. 2 angedeuteten Magnetbandspeicher oder Metallbandspeicher können auch Magnetdrahtspeicher, Magnetfolienscheiben oder -manschetten oder Halbleiterspeicher oder Magnetic-Bubble-Speicher eingesetzt werden.

Die Steuereinheit 13 und die Auswählvorrichtung 20 können eine festverdrahtete Steuerlogik enthalten oder in gewünschter Weise programmierbare Festkörperspeicher aufweisen, um eine programmierbare Steuerlogik zu verwirklichen.

## Patentansprüche

1. Einrichtung zur Registrierung der Daten bestimmter Gutmengen, insbesondere von Milchlieferungen, welche an Lieferstellen mittels eines Sammeltransportfahrzeugs (1) eingesammelt und zu einer Sammelstelle gebracht werden, mit einem im Sammeltransportfahrzeug befindlichen Registriergerät (5), welches Dateneingabevorrichtungen (7 bis 11), eine damit verbundene Steuereinheit (13) und einen daran angeschlossenen, einen aus dem Gerät entnehmbaren Datenträger (17) aufweisenden Speicher (16, 17) enthält, ferner mit einem Datenauswertgerät am Ort der Sammelstelle oder am Ort eines mehreren Sammelstellen übergeordneten Auswerte- bzw. EDV-Zentrums, in welches der Datenträger (17) des Speichers (16) des Registriergerätes einsetzbar bzw. einlesbar ist und in welchem im Speicher eingeschriebene Daten direkt oder indirekt nach einer Konvertierung auf einen gerätekompatiblen Datenträger über eine Konvertierstation ablesbar, verarbeitbar und auswertbar sind, dadurch gekennzeichnet, daß das Registriergerät (5) des Sammeltransportfahrzeugs (1) einen weiteren Speicher (18) mit aus dem Gerät (5) entnehmbarem weiterem Datenträger (19) enthält, wobei dieser weitere Speicher ebenfalls an die Steuereinheit (13) angeschlossen ist, daß die Steuereinheit (13) eine automatisch arbeitende Auswählvorrichtung (20) enthält, mittels welcher die über die Dateneingabevorrichtungen (7 bis 11) eintreffenden Daten den beiden Speichern (16, 18) wahlweise zuleitbar sind und daß die insbesondere in Digitalsignale umgeformten (12) Signale der Dateneingabevorrichtungen (7 bis 11) Signalanteile aufweisen, welche diese Dateneingabevorrichtungen kennzeichnen und welche das Auswahlkriterium für die Auswählvorrichtung (20) bilden.

2. Einrichtung nach Anspruch 1, dadurch gekennzeichnet, daß die Speicher (16, 18) räumlich unmittelbar nebeneinander angeordnet sind.

3. Einrichtung nach Anspruch 1 oder 2, dadurch gekennzeichnet, daß beide Speicher (16, 18) in ein- und demselben Gehäuse angeordnet sind.

4. Einrichtung nach Anspruch 2 oder 3, dadurch gekennzeichnet, daß die beiden Speicher (16, 18) physikalisch gleichwirkende, insbesondere gleiche Datenträger (17, 19) enthalten.

5. Einrichtung nach einem der Ansprüche 1 bis 4, dadurch gekennzeichnet, daß der Datenträger (19) des zweiten Speichers (18) die Gestalt eines Magnetdrahtes oder Magnetbandes oder Speicher-Metallbandes oder einer Magnetfolienscheibe oder eines Halbleiterspeichers oder eines Magnetic-Bubble-Speichers hat.

6. Einrichtung nach einem der Ansprüche 1 bis 5, dadurch gekennzeichnet, daß die Auswählvorrichtung (20) eine fest verdrahtete Steuerlogik oder einen programmierbaren Festwertspeicher zur Verwirklichung einer programmierbaren Steuerlogik enthält.

7. Einrichtung nach einem der Ansprüche 1 bis 6, dadurch gekennzeichnet, daß die Auswählvorrichtung (20) abhängig von einem Zustand auf dem Sammeltransportfahrzeug (1), insbesondere abhängig von dem Vorhandensein von mit einer Probennahmevorrichtung (6) zusammenwirkenden Probengefäßen ein- und ausschaltbar ist und daß die Steuereinheit (13) oder die Auswählvorrichtung (20) mit der Probennahmevorrichtung (6) gekoppelt (22) ist.

8. Einrichtung nach Anspruch 7, dadurch gekennzeichnet, daß die Probennahmevorrichtung (6) eine Probengefäß-Kennzeichnungsvorrichtung enthält, welche gleichzeitig mit oder abhängig von der Auswählvorrichtung gesteuert ist.

**Claims**

1. A system for recording data which relate to specific lots of materials, particularly to milk lots, which are collected at delivery locations by a collecting vehicle (1) and are brought by the latter to a collecting station, which system comprises a recorder (5), which is provided in the collecting vehicle and includes data input means (7 to 11), a control unit (13) connected thereto, and a memory (16, 17), which is connected thereto and contains a data carrier (17), which can be removed from the recorder, also comprising a data-evaluating device, which is located at the collecting station or at an evaluating or EDP centre, which is associated with and of higher rank than a plurality of collecting stations, the data carrier (17) of the memory (16) of the recorder being adapted to be inserted or read into said data-evaluating device, in which data that have been written into the memory are adapted to be read, processed and evaluated directly or after a conversion, effected by a converting station, onto a data carrier which is compatible with the device, characterized in that the recorder (5) of the collecting vehicle (1) includes an additional memory (18) having a data carrier (19), which is adapted to be removed from the recorder (5), said additional memory is also connected to the control unit (13), the control unit (13) contains an automatic selector (20), by which the data arriving via the data input means (7 to 11) are adapted to be selectively supplied to the two memories (16, 18), and the signals of the data input means (7 to 11) are particularly converted (12) to digital signals having signal portions which identify a data input means and constitute the criterion for the selection by the selector (20).

2. A system according to claim 1, characterized in that the memories (16, 18) are juxtaposed and closely spaced apart.

3. A system according to claim 1 or 2, characterized in that both memories (16, 18) are arranged in one and the same housing.

4. A system according to claim 2 or 3, characterized in that the two memories (16, 18) contain data carriers (17, 19) are alike in physical action and particularly identical.

5. A system according to any of claims 1 to 4, characterized in that the data carrier (19) of the second memory (18) consists of a magnetic wire or magnetic tape or recording metal tape or flexible magnetic disc or semi-conductor memory or magnetic bubble memory.

6. A system according to any of claims 1 to 5, characterized in that the selector (20) comprises a hard-wired control logic or a programmable read-only memory for providing a programmable control logic.

7. A system according to any of claims 1 to 6, characterized in that the selector (20) is adapted to be switched on and off in dependence on a state on the collecting vehicle (1), particularly in dependence on the presence of sample vessels which cooperate with a sample-taking device (6), and the control unit (13) or the selector (20) is coupled to the sample-taking device (6).

8. A system according to claim 7, characterized in that the sample-taking device (6) contains a sample vessel-marking device, which is controlled at the same time as or dependence or the selector.

**Revendications**

1. Dispositif pour l'enregistrement des données de quantités déterminées de produits, en particulier, de livraisons de lait qui sont collectées à des points de livraison au moyen d'un véhicule de transport collecteur (1) et qui sont acheminées à un point de collecte, ce dispositif comportant un appareil d'enregistrement (5) se trouvant dans le véhicule de transport collecteur et renfermant des dispositifs d'introduction de données (7 à 11), une unité de commande (13) raccordée à ces dispositifs, ainsi qu'une mémoire (16, 17) raccordée à cette unité de commande et comportant un support de données (17) pouvant être retiré de l'appareil, ce dispositif comportant également un appareil d'évaluation de données disposé à l'endroit du point de collecte ou à l'endroit d'un centre d'évaluation ou de traitement électronique de données attribué à plusieurs points de collecte et dans lequel le support de données (17) de la mémoire (16) de l'appareil d'enregistrement peut être introduit ou lu et dans lequel également les données inscrites dans la mémoire peuvent être lues, traitées et évaluées directement ou indirectement après conversion en un support de données compatible avec l'appareil via un poste de conversion, caractérisé en ce que l'appareil d'enregistrement (5) du véhicule de transport collecteur (1) comporte une autre mémoire (18) avec un autre support de données (19) pouvant être retiré de l'appareil (5), cette mémoire supplémentaire étant également raccordée à l'unité de commande (13), cette dernière comportant un dispositif sélecteur (20) fonctionnant automatiquement et au moyen duquel les données introduites via les dispositifs d'introduction de données (7 à 11) peuvent être acheminées sélectivement aux deux mémoires (16, 18), tandis que les signaux des dispositifs d'introduction de données (7 à 11), qui sont transformés, en particulier, en signaux numériques (12), comportent des fractions de signaux qui caractérisent ces dispositifs d'introduction de données et qui forment le critère de sélection pour le dispositif sélecteur (20).

2. Dispositif suivant la revendication 1, caractérisé en ce que les mémoires (16, 18) sont disposées immédiatement l'une à côté de l'autre dans l'espace.

3. Dispositif suivant la revendication 1 ou 2, caractérisé en ce que les deux mémoires (16, 18) sont installées dans un seul et même logement.

4. Dispositif suivant la revendication 2 ou 3, caractérisé en ce que les deux mémoires (16, 18) comportent des supports de données (17, 19) agissant physiquement de la même manière et, en particulier, identiques.

5. Dispositif suivant une des revendications 1 à 4, caractérisé en ce que le support de données (19) de la deuxième mémoire (18) a la forme d'un fil magnétique, d'une bande magnétique, d'une bande métallique de mémoire, d'un disque à feuille magnétique, d'une mémoire à semiconducteur ou d'une mémoire magnétique à bulles.

6. Dispositif suivant une des revendications 1 à 5, caractérisé en ce que le dispositif sélecteur (20) comporte une logique de commande à câblage fixe ou une mémoire à valeur constante programmable en vue de réaliser une logique de commande programmable.

7. Dispositif suivant une des revendications 1 à 6, caractérisé en ce que le dispositif sélecteur (20) peut être mis en et hors circuit indépendamment d'un état existant sur le véhicule de transport collecteur (1), en particulier, indépendamment de la présence de récipients d'échantillons coopérant avec un dispositif de prélèvement d'échantillons (6), tandis que l'unité de commande (13) ou le dispositif sélecteur (20) est accouplé au dispositif de prélèvement d'échantillons (6).

8. Dispositif suivant la revendication 7, caractérisé en ce que le dispositif de prélèvement d'échantillons (6) comprend un dispositif de caractérisation de récipients d'échantillons qui est commandé simultanément avec ou indépendamment du dispositif sélecteur.

## FIG. 1

## FIG. 2